# EUROPEAN PATENT APPLICATION

(11) **EP 2 677 728 A1**
(43) Date of publication of application: **25.12.2013**
(21) Application number: 13163427.1
(22) Date of filing: 11.04.2013
(51) Int. Cl.: H04M 1/725, H04W 52/02, G08B 21/06

(54) **Mobile terminal with location information acquiring portion**

(30) Priority: 19.06.2012 JP 2012137468
(71) Applicant: Funai Electric Co., Ltd., Daito-shi Osaka 574-0013 (JP)
(72) Inventor: Iida, Yusuke, Osaka, Osaka 574-0013 (JP)
(74) Representative: Osha Liang SARL

(57) **Abstract**

A mobile terminal (1) includes a detecting portion (12) that detects a state of a user (100), a location information acquiring portion (13) that acquires location information of a current location of the user (100), and a controlling portion (10) configured to determine whether the user (100) is in a drowsing state or a wakeful state, based on the state of the user (100) detected by the detecting portion (12). If the controlling portion (10) determines that the user (100) is in a drowsing state, the controlling portion (10) drives the location information acquiring portion 13) so as to acquire the location information for the current location, and if the controlling portion (10) determines that the user (100) is in a wakeful state, the controlling portion (10) stops the location information acquiring portion (13).

## Description

### [Field of Technology]

The present invention relates generally to a mobile terminal, and, in particular, relates to a mobile terminal provided with a location information acquiring portion for acquiring location information for the current location, and to a program that runs in said mobile terminal.

### [Background of the Invention]

Conventionally, there are known mobile terminals provided with location information acquiring portions for acquiring location information of the current location (e.g., Patent Document 1).

Patent Document 1 discloses a missed-stop preventing alarm device (a mobile terminal) provided with a GPS antenna for receiving a GPS signal (a location information acquiring portion), an alarm device for emitting alarm, and a calculating device. In this missed-stop preventing alarm device, the calculating device calculates the current location based on the GPS signal. The calculating device is configured so that, when the current location is identified as being within a specific range centered on the location of a destination, the calculating device activates the alarm device to notify the user of the arrival at the destination.

[Patent Document 1] Japanese Unexamined Patent Application Publication 2001-324352

However, in the missed-stop preventing alarm device as set forth in Patent Document 1, it is necessary to have the GPS antenna always activated, even when the user is in a wakeful state wherein it is possible to confirm arrival at the destination based on announced information (such as an arrival destination display) other than the alarm device. Because of this, there is continuous power consumption in the GPS antenna.

### [Summary of the Invention]

One or more embodiments of the present invention provide a mobile terminal capable of reducing power consumption in the mobile terminal through reducing the power consumption in the location information acquiring portion.

A mobile terminal according to one aspect of the present invention is a mobile terminal, which may be held by a user, comprising a detecting portion that detects the state of the user, a location information acquiring portion that acquires location information of a current location of the user, and a controlling portion configured to determine, based on the state of the user detected by the detecting portion, whether the user is in a drowsing state or a wakeful state, and, if the controlling portion determines that the user is in a drowsing state, the controlling portion drives the location information acquiring portion so as to acquire the location information of the current location, while if the controlling portion determines that the user is in a wakeful state, the controlling portion stops (for example, disable) the location information acquiring portion.

Because, in the mobile terminal according to one or more embodiments of the present invention, the controlling portion, as described above, performs control so as to activate the location information acquiring portion to acquire location information of the current location if the controlling portion determines that the user is in a drowsing state, and performs control so as to stop the location information acquiring portion if there the controlling portion determines that the user is in a wakeful state, it is possible to reduce power consumption in the location information acquiring portion by stopping the location information acquiring portion when the user is in a wakeful state, unlike a case wherein the location information acquiring portion is driven regardless of whether the user is in a drowsing state or a wakeful state. This makes it possible to reduce the power consumption in the mobile terminal.

In the mobile terminal according to one or more embodiments, the configuration is such that that the detecting portion can detect shifting (or moving) of the body of the user, and the controlling portion is configured to acquire a shifting period during which shifting of the body of the user occurs at or above a threshold value, and to determine a drowsing state or a wakeful state of the user based on the acquired shifting period. Such a configuration enables a reliable determination of a drowsing state or wakeful state of the user based on the shifting period obtained from the shifting of the body of the user.

In one or more embodiments, the controlling portion is configured to determine whether the acquired shifting period match is a reference period, and, if the frequency with which the shifting period matches the reference period is at least a specific percentage, determines the user to be in a drowsing state. Such a configuration enables a determination that the user is in a drowsing state if the frequency with which the shifting period matches the reference period is at least a specific percentage, even if the acquired shifting periods include shifting periods that do not match the reference period, thus making it possible to increase the determination accuracy of a drowsing state versus a wakeful state.

According to one or more embodiments, for example in the mobile terminal that determines whether or not the shifting period matches the reference period, the controlling portion is configured to determine that the acquired shifting period matches the reference period if the acquired shifting period is within a specific range of the reference period. Such a configuration enables the acquired shifting period to be viewed as matching the reference period, even if a shifting period that is somewhat divergent from the reference period is acquired from a user in a drowsing state, thus making it possible to prevent determination omissions when the user is in a drowsing state.

According to one or more embodiments, for example in the mobile terminal that determines whether or not the shifting period matches the reference period, the controlling portion is configured to determine whether the acquired shifting period matches the reference period based on a reference period unique to the user, set in advance by the user. Such a configuration enables different reference periods to be set for each user, thus enabling the determination as to whether the user is in a drowsing state or a wakeful state to be made based on a reference period that is suited to the individual user.

According to one or more embodiments, for example in the mobile terminal wherein the detecting portion is able to detect shifting of the body of the user, the mobile terminal is placed near the chest portion of the user who is in a seated state. Such a configuration enables reliable detection, in the detecting portion, of the shifting of the upper body of the user, which is higher than the waist of the user, who is in a seated state, thus enabling easy determination as to whether the user is in a drowsing state or a wakeful state.

The mobile terminal according to one or more embodiments of the present invention may also comprise a notifying portion for notifying the user of arrival at the destination based on the location information of the current location, acquired by the location information acquiring portion, wherein the controlling portion is configured to control the notifying portion to provide notification of arrival at the destination to the user determined to be in a drowsing state. Such a configuration enables notification of arrival at the destination, using the notifying portion, for a user for which there is a high likelihood of riding past the destination, due to being in a drowsing state, thus making it possible to prevent the user from riding past the destination.

According to one or more embodiments of the present invention, the controlling portion is configured to control the notifying portion to provide notification of arrival at the destination, and also to stop the location information acquiring portion and the detecting portion. Such a configuration eliminates the need for the location information of the current location, and eliminates the need for detecting the state of the user, after notifying the user of arrival at the destination, and thus stops both the location information acquiring portion and the detecting portion when they need not be driven, thus making it possible to reduce the power consumption in both. This makes it possible to reduce effectively the power consumption in the mobile terminal.

According to another aspect of the present invention, there is provided a non-transitory computer-readable medium storing a program for causing a controlling portion of a mobile terminal to execute instructions comprising causing a detecting portion to detect the state of the user, determining, based on the state of the user detected by the detecting portion, whether the user is in a drowsing state or a wakeful state, and, if it is determined that the user is in a drowsing state, driving a location information acquiring portion to acquire location information for the current location of the user, and, if it is determined that the user is in the wakeful state, stopping the location information acquiring portion.

According to one or more embodiments of the present invention, the controlling portion, as described above, may be caused to function as means for activating the location information acquiring portion to acquire location information of the current location if it is determined that the user is in a drowsing state, and as means for stopping the location information acquiring portion if it is determined that the user is in a wakeful state. In this way, it is possible to reduce power consumption in the location information acquiring portion by stopping the location information acquiring portion when the user is in a wakeful state, unlike a case wherein the location information acquiring portion is driven regardless of whether the user is in a drowsing state or a wakeful state. This makes it possible to reduce the power consumption in the mobile terminal.

One or more embodiments of the present invention enables the achievement of a reduction in power consumption in the position information acquiring portion, as described above, enabling a reduction in the power consumption of the mobile terminal.

### [Brief Descriptions of the Drawings]

FIG. 1 is a schematic diagram illustrating the state wherein a seated user wears, on his or her body, a mobile terminal according to one embodiment of the present invention.
FIG. 2 is a block diagram illustrating a configuration of a mobile terminal according to one embodiment of the present invention.
FIG. 3 is a diagram illustrating acceleration based on the shifting of the body of a user, detected by an acceleration sensor, in a mobile terminal according to one embodiment of the present invention.
FIG. 4 is a diagram illustrating a control procedure flow in an initial setup mode for a drowsing detecting program in a mobile terminal according to one embodiment of the present invention.
FIG. 5 is a diagram illustrating a control procedure flow in a destination registering mode of a notifying application in a mobile terminal according to one embodiment of the present invention.
FIG. 6A is the first section of a diagram illustrating a control procedure flow of a drowsing detecting program in a mobile terminal according to one embodiment of the present invention.
FIG. 6B is the second section of the diagram of Fig. 6A.
FIG. 7 is a diagram illustrating a control procedure flow in a notifying application in a mobile terminal according to one embodiment of the present invention.

### [Detailed Description of Embodiments of the Invention]

Embodiments according to the present invention will be explained below based on the drawings.

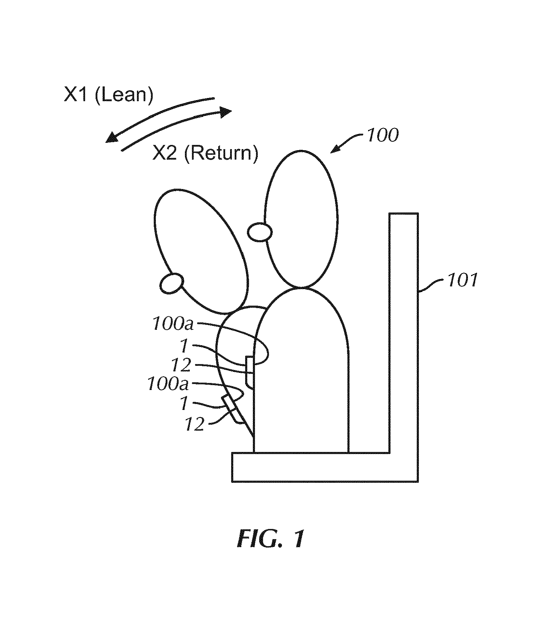

First the structure of a mobile terminal 1 according to one embodiment of the present invention will be explained with reference to FIG. 1 through FIG. 3.

The mobile terminal 1 according to the embodiment according to the present invention, as illustrated in FIG. 1 is held on a user 100 through being placed into a breast pocket 100a of the user 100. The user 100 is a passenger on a train or a bus, not shown, and is in a state seated in a seat 101.

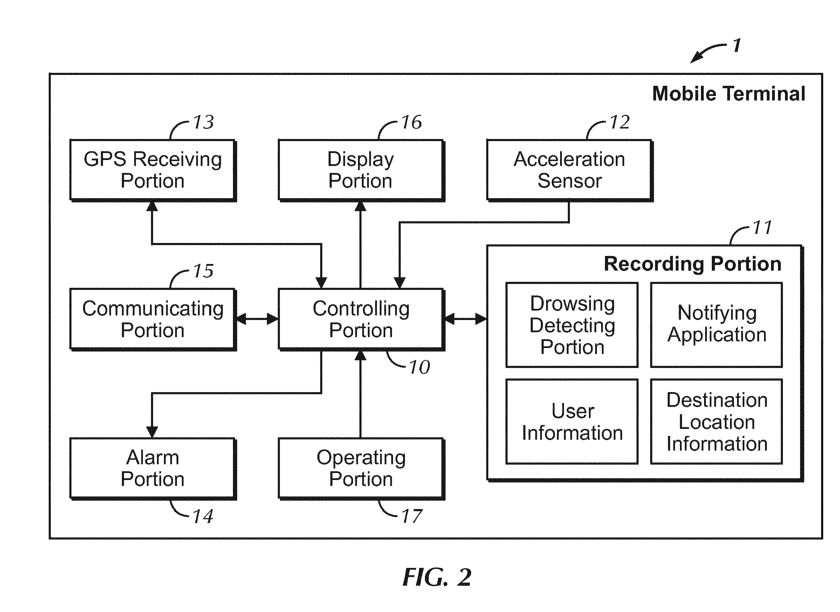

The mobile terminal 1, as illustrated in FIG. 2, comprises a controlling portion 10, a recording portion 11, an acceleration sensor 12, a GPS receiving portion 13, an alarm portion 14, a communicating portion 15, a display portion 16, and an operating portion 17. Note that the acceleration sensor 12, the GPS receiving portion 13, and the alarm portion 14 are, respectively, examples of the "detecting portion," "location information acquiring portion," and "notifying portion" in the present disclosure.

The controlling portion 10 is made from a CPU, and is configured so as to perform the overall operational control of the mobile terminal 1 through executing a control program. Moreover, the controlling portion 10 is configured so as to enable execution of programs and applications that are recorded in the recording portion 11.

A drowsing detecting program, a notifying application, and user information and destination location information, recorded in advance by the user 100 (FIG. 1) are recorded in the recording portion 11. Note that the drowsing detecting program includes an initial setup mode for recording user information. Moreover, the notifying application includes a destination registering mode for registering location information for a destination. Note that the drowsing detecting program and the notifying application are examples of "programs" in the present disclosure.

The acceleration sensor 12 is configured so as to be able to detect accelerations that act on the mobile terminal 1. Note that the controlling portion 10 is configured so as to be able to eliminate, from the accelerations detected by the acceleration sensor 12, those accelerations caused by the train or the bus ridden by the user 100. As a result, the acceleration sensor 12 is configured so as to be able to detect accelerations based on the shifting (or moving) of the body of the user 100.

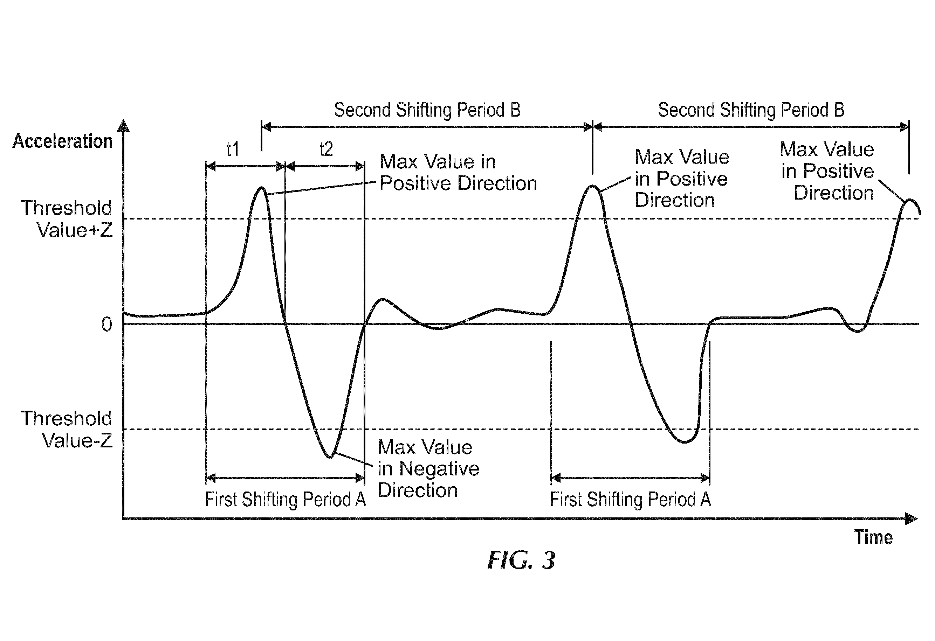

Moreover, as illustrated in FIG. 1, the configuration is such that when the body of the user 100 leans toward the X1 side, as illustrated in FIG. 3, the acceleration sensor 12 detects a positive value as the acceleration when the user 100 leans. Moreover, the configuration is such that, as illustrated in FIG. 1, when the body of the user 100, which is in a state leaning to the X1 side, returns to the X2 side, as illustrated in FIG. 3, the acceleration sensor 12 detects a negative value as the acceleration when the user 100 returns.

Here, as illustrated in FIG. 3, the period of the series of shifts of the body from the body of the user 100 leaning until returning is defined as a first shifting period A. Specifically, from the beginning of detection of the positive value for the acceleration when the body of the user 100 begins to lean, until the acceleration of the maximum lean positive value ceases to be detected after the acceleration exceeds a threshold value +Z is defined as a time interval t1. Moreover, from the beginning of the return of the body of the user 100, which is in a leaning state, until the body of the user 100 returns to the state from prior to the leaning, after the acceleration has exceeded the threshold value -Z, is defined as a time interval t2. In addition, the sum of the time interval t1 and the time interval t2 is defined as the first shifting period A. Furthermore, the time interval from one series of shifts of the body to the next series of shifts of the body is defined as a second shift period B. Specifically, the time interval between the positive maximum value of the acceleration in one series of shifts of the body until the positive maximum value of the acceleration in the next series of shifts of the body is defined as the second shift period B. Note that the first shift period A and the second shift period B are examples of the "shift period" in the present disclosure.

As illustrated in FIG. 2, the GPS receiving portion 13 is configured so as to be able to acquire location information for the current location of the mobile terminal 1 through receiving a GPS signal. The location information of the present location is structured from coordinate data for the current location. The controlling portion 10 is configured so as to be able to perform control so as to start and stop driving of the GPS receiving portion 13 through controlling the provision of power to the GPS receiving portion 13 or stopping the provision of power thereto. The alarm portion 14 has a function for generating an alarm tone, a vibration, or the like.

The communicating portion 15 has a function for connecting to an external server or the like, not shown, through a network. The display portion 16 has a function for displaying a setup screen, and the like, not shown. The operating portion 17 has a function for receiving operations of the user 100 on the mobile terminal 1.

Furthermore, the user information in the recording portion 11 includes personal information that is unique to the user 100, recorded in the initial setup mode for the drowsing detecting program, and a determination period number Nα set by the user 100. The personal information includes a numeric value that serves as a reference for determining whether the user 100 is in a drowsing state or a wakeful state. Specifically, the personal information includes threshold values +Z and -Z (FIG. 3) that serve as references for the magnitudes of accelerations based on the shifting of the body of the user 100, a first reference period Aα that serves as a reference for the first shifting period A (FIG. 3), and a second reference period Bα that serves as a reference for the second shifting period B (FIG. 3). Note that the second reference period Bα is an example of a "reference period" according to the present disclosure.

The location information for the destination in the recording portion 11 is structured from the coordinate data of the destination, and is recorded based on destination information such as the train station name, bus stop name, address, or the like, of a destination, inputted by the user 100.

Here, in the present embodiment, a determination is made as to whether the user 100 (FIG. 1) is in a drowsing state or a wakeful state by the controlling portion 10 based on the first shifting period A and second shifting period B (FIG. 3), and on the personal information and the determination period number Nα. Given this, the GPS receiving portion 13 (FIG. 2) is activated by the controlling portion 10 if the determination is that the user 100 is in a drowsing state, or the GPS receiving portion 13 is stopped if the determination is that the user 100 is in a wakeful state. Moreover, if there is a determination, based on a driven GPS reception signal 13, that the mobile terminal has arrived in the vicinity of the destination, based on the location information of the current location, then the user 100 is notified of the arrival at the destination by the controlling portion 10 through the alarm portion 14 (FIG. 2), and the GPS receiving portion 13 is stopped by the controlling portion 10. The configuration is such that this series of control operations is performed by the execution of a drowsing detecting program and a notifying application by the controlling portion 10. Note that the detailed control procedures in the controlling portion 10 will be described below.

FIG. 1 through FIG. 4 will be referenced next to explain the control procedure flow in the initial setup mode for the drowsing detecting program in the controlling portion 10 of the mobile terminal 1.

A user 100 (FIG. 1) who is riding a train or a bus is seated in a seat 101 (FIG. 1). The operating portion 17 (FIG. 2) is operated by the user 100 to run the initial setup mode of the drowsing detecting program. Note that the mobile terminal 1 is placed into the breast pocket 100a (FIG. 1) of the user 100.

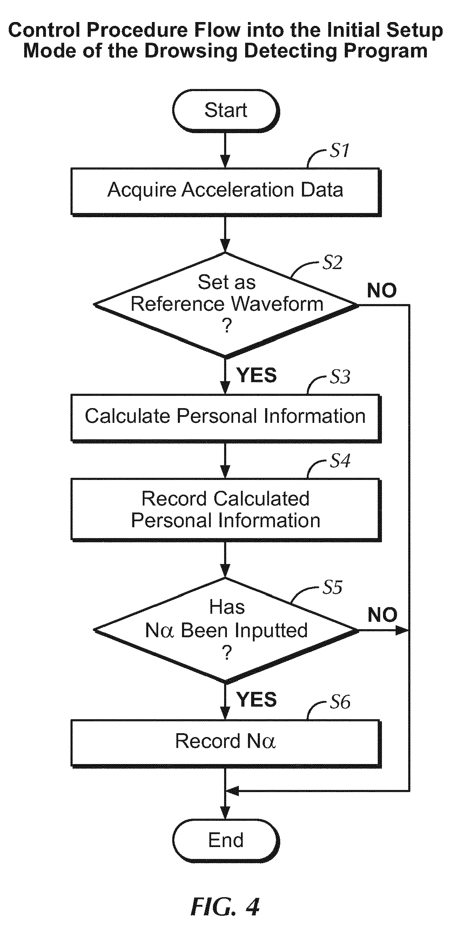

In this state, as illustrated in FIG. 4, acceleration data (FIG. 3) is obtained based on the shifting of the body of the user 100 from the acceleration sensor 12 (FIG. 2) in Step S1 by the controlling portion 10 (FIG. 2). Given this, in Step S2, the user determines whether or not to set, as the reference waveform, the acceleration data that has been obtained by the controlling portion 10. If it is determined that it is not to be set as the reference waveform, then the control procedure of the initial setup mode of the drowsing detecting program of the controlling portion 10 is terminated.

Moreover, if it is determined that it is to be set as the reference waveform, then, in Step S3, the personal information that is unique to the user 100 is calculated by the controlling portion 10 based on the reference waveform that has been acquired. Specifically, an average of the positive maximum values and an average of the negative maximum values are calculated, respectively, by the controlling portion 10 from a plurality of positive maximum values and negative maximum values included in the acceleration data. Given this, values that are a specific percentage lower than the calculated average of positive maximum values and average of negative maximum values are calculated as a threshold value +Z and a threshold value -Z (FIG. 3), respectively. Moreover, the average for a plurality of first shifting periods A (FIG. 3) and an average for a plurality of second shifting periods B (FIG. 3) are calculated, respectively, as a first reference period Aα and a second reference period Bα. Thereafter, the personal information, which includes the calculated threshold values +Z and -Z, along with the first reference period Aα and the second reference period Bα are recorded into the recording portion 11 (FIG. 2) by the controlling portion 10 in Step S4.

Given this, in Step S5 there is a determination by the controlling portion 10 as to whether or not a determination period number Nα has been inputted by the user 100. If the determination is that the determination period number Nα as not been inputted, then the control procedure in the initial setup mode of the drowsing detecting program of the controlling portion 10 is terminated. However, if the determination is that the determination period number Nα has been inputted, then, in Step S6, the inputted determination period number Nα is stored by the controlling portion 10 into the recording portion 11. Given this, the control procedure of the initial setup mode for the drowsing detecting program of the controlling portion 10 is terminated.

The control procedure flow of the destination registering mode of the notifying application in the controlling portion 10 of the mobile terminal 1 will be explained next in reference to FIG. 1, FIG. 2, and FIG. 5.

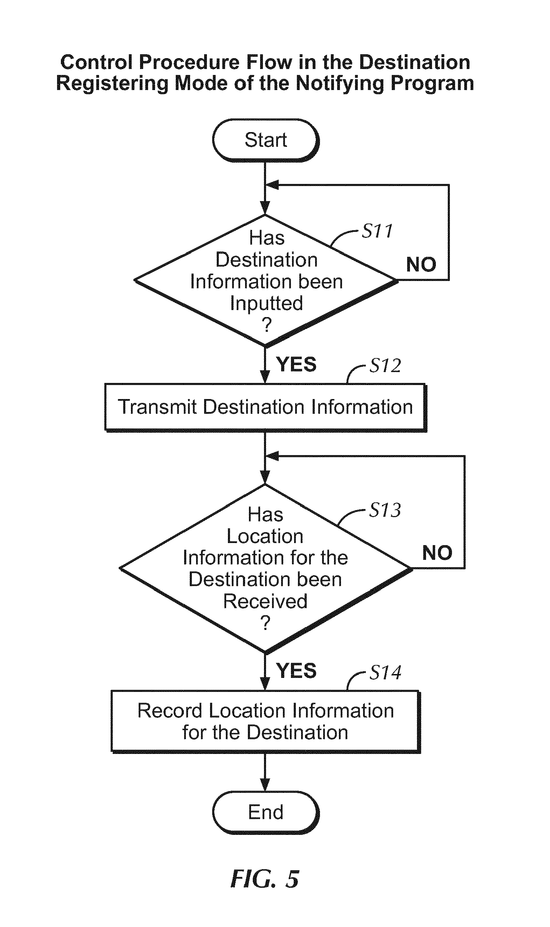

The destination registering mode of the notifying application is executed through operation of the operating portion 17 (FIG. 2) by the user 100 (FIG. 1). Then, as illustrated in FIG. 5, in Step S11 a determination is made by the controlling portion 10 (FIG. 2) as to whether or not destination information, such as a train station name, a bus stop name, an address, or the like, of a destination has been inputted by a user 100, and the determination by the controlling portion 10 is repeated until there is a determination that destination information has been inputted. When there is a determination that destination information has been inputted, then, in Step S12, the destination information is sent by the controlling portion 10 through the communicating portion 15 (FIG. 2) to an external server.

Given this, in Step S13 there is a determination by the controlling portion 10 as to whether or not the location information of the destination, corresponding to the destination information, has been received from the external server, and this determination is repeated until there is a determination that the location information of the destination has been received. When there is a determination that the location information of the destination has been received, then, in Step S14, the location information of the destination is recorded by the controlling portion 10 into the recording portion 11 (FIG. 2). Given this, the control procedure in the destination registering mode of the notifying application of the controlling portion 10 is completed.

The control procedure flow of the drowsing detecting program in the controlling portion 10 of the mobile terminal 1 will be explained next in reference to FIG. 1 through FIG. 3, FIGs. 6A and 6B, and FIG. 7.

A user 100 (FIG. 1) who has boarded a train or bus sits in a seat 101 (FIG. 1). The notifying application is launched by operation of the operating portion 17 (FIG. 2) by the user 100. After this, the mobile terminal 1 is placed with into a breast pocket 100a (FIG. 1) of the user 100. Here, when the notifying application is launched, the drowsing detecting program is launched at the same time. Moreover, the supply of power to the GPS receiving portion 13 (FIG. 2) is stopped by the controlling portion 10 (FIG. 2).

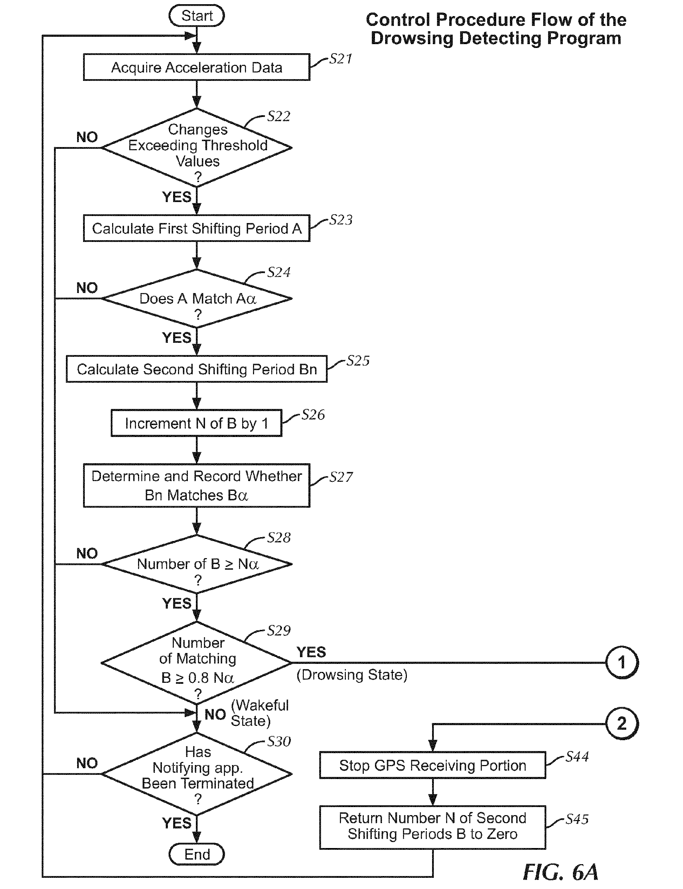

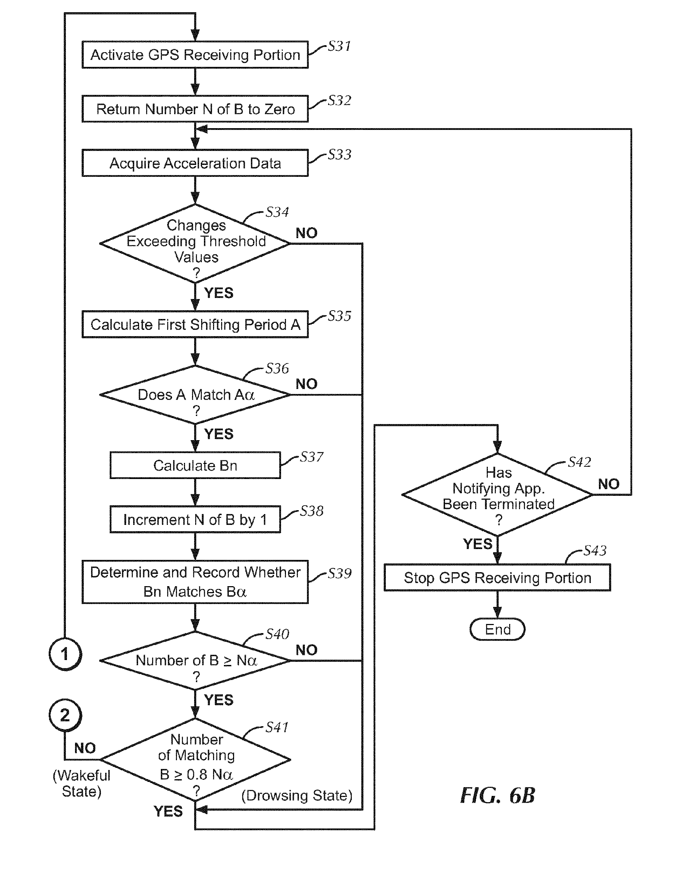

In this state, as illustrated in FIGs. 6A and 6B, acceleration data (FIG. 3) that is based on shifting of the body of the user 100 is collected in Step S21 by the controlling portion 10 from the acceleration sensor 12 (FIG. 2). In Step S22, there is a determination by the controlling portion 10 as to whether or not there is, in the acceleration data, changes in the acceleration in excess of the threshold values +Z and -Z through the acceleration becoming larger than the threshold value +Z (FIG. 3) in the positive direction and also the acceleration becoming larger than the threshold value -Z (FIG. 3) in the negative direction. If there is a determination that there have not been changes in the acceleration in excess of the threshold values +Z and -Z, then processing advances to Step S30, without calculating a first shifting period A or a second shifting period B (FIG. 3).

Moreover, if there is a determination that the acceleration has changed in excess of the threshold values +Z and -Z, then in Step S23 the first shifting period A is calculated by the controlling portion 10 from the acceleration data. In Step S24 there is a determination by the controlling portion 10 as to whether or not the calculated first shifting period A matches the first reference period Aα that is unique to the user 100. Specifically, if the first shifting period A is in the range of between about 90% and about 110% (a range of about ± 10%) of the first reference period Aα, then there is a determination that the first shifting period A matches the first reference period Aα. If there is a determination that the first shifting period A does not match the first reference period Aα, then processing advances to Step S30 without calculating the second shifting period B.

Moreover, if there is a determination that the first shifting period A matches the first reference period Aα, then, in Step S25, the second shifting period Bn (where Bn represents the second shifting period B in the N^{th} calculation) is calculated by the controlling portion 10 from the acceleration data, and then, in Step S26, the number N of the second shifting period B is incremented by 1. Given this, in Step S27, a determination is performed by the controlling portion 10 as to whether or not the calculated N^{th} second shifting period Bn matches the second reference period Bα that is unique to the user 100. Specifically, if the second shifting period Bn is in the range of between about 90% and about 110% (a range of about + 10%) of the second reference period Bα, then there is a determination that the second shifting period Bn matches the first reference period Bα. Given this, whether or not the N^{th} second shifting period Bn matches the second reference period Bα is recorded in the recording portion 11 (FIG. 2).

Given this, in Step S28, there is a determination by the controlling portion 10 as to whether or not the number N of the calculated second shifting period B is equal to or greater than the determination period number Nα set by the user 100. If the number N of the second shifting period B is determined as being less than the determination period number Nα, then processing advances to Step S30 without performing the determination as to whether the user 100 is in a drowsing state or a wakeful state.

Moreover, if it is determined that the number N of the second shifting period B is greater than or equal to the determination period number Nα, then, in Step S29, there is a determination by the controlling portion 10 as to whether the user 100 is in a drowsing state or a wakeful state. Specifically, there is a determination as to whether or not the number of second periods B that match the second reference period Bα, from among the Nα second shifting periods B from the (N - Nα +1)^{th} second shifting period B to the most recent (N^{th}) second shifting period B is at least equal to 0.8 Nα (80%). Note that if the 0.8 Nα includes a value beyond the decimal point, that value may be rounded down to the nearest whole number, rounded up to the nearest whole number, or rounded to the nearest whole number. If it is determined that, of the Nα second shifting periods B, the number of second shifting periods B that match the second reference period Bα is less than 0.8 Nα, then it is determined that the user 100 is in a wakeful state, and the supply of power to the GPS receiving portion 13 by the controlling portion 10 continues to be stopped, and the GPS receiving portion 13 is not activated. Then, processing advances to Step S30.

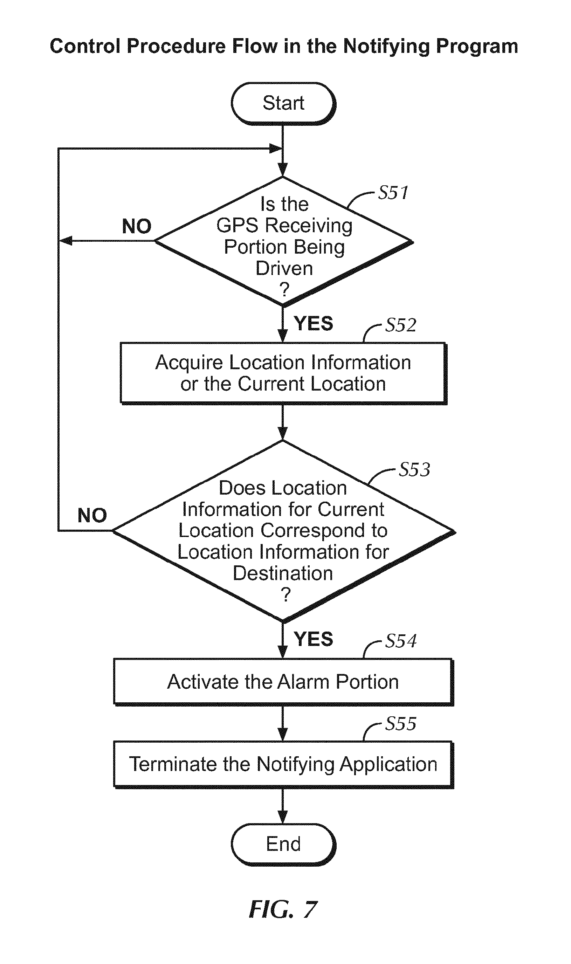

Thereafter, in Step S30, a determination is performed by the controlling portion 10 as to whether or not the notifying application has been terminated. Note that the notifying application is terminated either by the control procedure of Step S55 (FIG. 7) in the notifying application, described below, or by an operation of the operating portion 17 by the user 100. If it is determined that the notifying application has been terminated, then it is no longer necessary to run the drowsing detecting program, so the control procedure for the drowsing detecting program in the controlling portion 10 is also terminated. On the other hand, if the notifying application has not been terminated, then processing returns to Step S21, and acceleration data is collected again.

Here, in the present embodiment, if in Step S29 it is determined that, of the Nα second shifting periods B, the number of second shifting periods B that match the second reference period Bα is at least 0.8 Nα, then the determination is that the user 100 is in a drowsing state, and in Step S31 the supply of power to the GPS receiving portion 13 is started by the controlling portion 10, to activate the GPS receiving portion 13. As a result, the location information of the current location is acquired in Step S52 (FIG. 7) of the notifying application, described below.

Moreover, in Step S32 the number N of the second shifting periods B is set to zero and the records of the second shifting periods B obtained up to the determination that the user 100 is in a drowsing state are erased from the recording portion 11 by the controlling portion 10.

Thereafter, a procedure that is identical to the procedure from Step S21 to Step S30, described above, is performed by the controlling portion 10 in the respective Step S33 through Step S42, to determine whether the user 100, who has been determined as being in a wakeful state, is in a drowsing state or a wakeful state. Specifically, in Step S33 acceleration data is acquired by the controlling portion 10, and in Step S34 a determination is performed as to whether or not the acceleration has changed to exceed the threshold values +Z and -Z. If it is determined that the acceleration has not changed to exceed the threshold values +Z and -Z, then processing advances to Step S42. If it is determined that the acceleration has changed so as to exceed the threshold values +Z and -Z, then, in Step S35, the first period A is calculated by the controlling portion 10 and, in Step S36, a determination is performed as to whether or not the first shifting period A matches the first reference period Aα. If the determination is that the first shifting period A does not match the first reference period Aα, then processing advances to Step S42.

Moreover, if the determination is that the first shifting period A matches the first reference period Aα, then, in Step S37, the N^{th} second shifting period Bn is calculated by the controlling portion 10, and in Step S38 the number N of the N^{th} second shifting period B is incremented by 1. Given this, in Step S39 a determination is performed by the controlling portion 10 as to whether or not the second shifting period Bn matches the second reference period Bα, and is recorded in the recording portion 11, and then, in Step S40, a determination is performed as to whether or not the number N of the second shifting period B is greater than or equal to the determination period number Nα. If the determination is that the number N of the second shifting period B is less than the determination period number Nα, processing advances to Step S42. Moreover, if the determination is that the number N of the second shifting period B is equal to or greater than the determination period number Nα, then in Step S41 a determination is performed by the controlling portion 10 as to whether or not, of the Nα second shifting periods B from the (N - Nα +1)^{th} second shifting period B to the most recent (the N^{th}) second shifting period B, the number of second shifting periods B that match the second reference period Bα is at least equal to 0.8 Nα. If the determination is that, of the Nα second shifting periods B, the number of second shifting periods B that match the second reference period Bα is no less than 0.8 Nα, then the determination is that the user 100 is in a drowsing state, and the GPS receiving portion 13 is not stopped.

Moreover, in Step S42 a determination is performed by the controlling portion 10 as to whether or not the notifying application has been terminated. If the determination is that the notifying application has been terminated, then, in Step S43, the GPS receiving portion 13 is stopped by the controlling portion 10, and the control procedure in the drowsing detecting program in the controlling portion 10 is stopped as well. On the other hand, if the determination is that the notifying application has not been terminated, then processing returns to Step S33.

Moreover, in the present embodiment, if in Step S41 the determination is that, of the Nα second shifting periods B, the number of second shifting periods B that match the second reference period Bα is less than 0.8 Nα, then it is determined that the user 100 is in a wakeful state, and, in Step S44, the GPS receiving portion 13, which had been driven, is stopped by the controlling portion 10. As a result, the acquisition of the location information for the current location by the notifying application, described below, is stopped in Step S52. Moreover, in Step S45, not only is the number N of second shifting periods B set to zero by the controlling portion 10, but also the records of the second shifting periods B, acquired up until the determination that the user 100 is in a wakeful state, are erased from the recording portion 11 by the controlling portion 10. Thereafter, processing returns to Step S21, and a determination is performed as to whether the user 100, who had been determined to be in a drowsing state, is in a wakeful state.

Performing the control procedures set forth above makes it possible to drive the GPS receiving portion 13 only when it is determined that the user 100 is in a drowsing state.

The control procedure flow of the notifying application in the controlling portion 10 of the mobile terminal 1 will be explained next in reference to FIG. 2, FIGs. 6A and 6B, and FIG. 7.

When the notifying application is executed by the user 100 then, as illustrated in FIG. 7, in Step S51 the control procedure of Step S31 (FIG. 6B) of the control procedure flow of the drowsing detecting program is executed by the controlling portion 10 (FIG. 2), to determine whether or not the GPS receiving portion 13 (FIG. 2) is being driven, and to perform the determination repetitively until there is a determination that the GPS receiving portion 13 is being driven. When there is a determination that the GPS receiving portion 13 is being driven, then, in Step S52, the location information for the current location in the GPS receiving portion 13 is obtained by the controlling portion 10.

Given this, in Step S53, a determination is performed by the controlling portion 10 as to whether or not the location information obtained for the current location corresponds to the location information for the destination that is stored in the recording portion 11. Specifically, if the location information for the current location is within a specific range centered on the location information for the destination, then the determination will be that the location information for the current location corresponds to the location information of the destination. If the determination is that the location information for the current location does not correspond to the location information for the destination, processing returns to Step S51. Moreover, if the determination is that the location information for the current location corresponds to the location information for the destination, then, in Step S54, the alarm portion 14 is activated by the controlling portion 10, to provide notification to the user 100 of arrival at the destination through an alarm tone, a vibration, or the like. Finally, in Step S55, the notifying application is terminated by the controlling portion 10, to terminate the control procedure in the notifying application in the controlling portion 10. Concomitant with this, the control procedure in the drowsing detecting program is also terminated by the controlling portion 10, with the GPS receiving portion 13 in a stopped state.

In the present embodiment, as described above, if there is a determination by the controlling portion 10 in the drowsing detecting program that, of the Nα second shifting periods B, the number of second shifting periods B matching the second reference period Bα is greater than or equal to 0.8 Nα, then it is determined that the user 100 is in a drowsing state, and the supply of power to the GPS receiving portion 13 is started, to activate the GPS receiving portion 13, but if the determination is that, of the Nα second shifting periods B, the number of second shifting periods B matching the second reference period Bα is less than 0.8 Nα, the determination will be that the user 100 is in a wakeful state, and the driven GPS receiving portion 13 will be stopped. Such a configuration differs from the case wherein the GPS receiving portion 13 is driven regardless of whether the user 100 is in a drowsing state or a wakeful state, but rather the GPS receiving portion 13 is stopped when the user 100 is in a wakeful state, thus making it possible to achieve a reduction in the power consumed in the GPS receiving portion 13. This enables a reduction in the power consumed in the mobile terminal 1. Moreover, because an alarm portion 14 can be used to provide notification of arrival at the destination to a user 100 for whom there is a high likelihood of missing the destination, due to being in a drowsing state, it is possible to prevent the user 100 from riding past the destination.

Furthermore, in the present embodiment, as described above, when there is a determination by the controlling portion 10 that there have been changes in the accelerations detected by the acceleration sensor 12 in excess of the threshold values +Z and -Z, the first shifting period A and the second shifting period B are acquired and a determination is performed as to whether the user 100 is in a drowsing state or a wakeful state based on the first shifting period A and the second shifting period B, thereby making it possible to determine reliably whether the user 100 is in a drowsing state or a wakeful state, based on the first shifting period A and the second shifting period B acquired from the shifting of the body of the user 100.

Moreover, in the present embodiment, as described above, when there is a determination by the controlling portion 10 that, of the Nα second shifting periods B, the number of second shifting periods B that match the second reference period Bα is greater than or equal to 0.8 Nα, it is determined that the user 100 is in a drowsing state, thus making it possible to determine that the user 100 is in a drowsing state if the number of second shifting periods B that match the second reference period Bα is at least a specific percentage (80%) of the shifting periods, even if the second shifting periods B that are obtained include second shifting periods B that do not match the second reference period Bα, thus making it possible to increase the determination accuracy of the drowsing state versus the wakeful state.

Moreover, in the present embodiment, as described above, if a second shifting period Bn is included in a range of about 90% to about 110% of the second reference period Nα, it is determined by the controlling portion 10 that the second shifting period Bn matches the second reference period Bα, thus making it possible to consider an obtained second shifting period Bn as matching the second reference period Bα even if a second shifting period Bn in the range of between about 90% and about 110% of the second reference period Bα is obtained from a user 100 in a drowsing state, thus making it possible to prevent incorrect determinations when the user 100 is in a drowsing state.

Moreover, in the present embodiment, as described above, a determination is performed by the controlling portion 10 as to whether or not an acquired first shifting period A and an acquired second shifting period B match, respectively, a first reference period Aα and a second reference period Bα, based on a first reference period Aα and a second reference period Bα that are unique to the user 100, set in advance by the user 100 in an initial setup mode, thus making it possible for the first reference period Aα and the second reference period Bα to each be set differently for each individual user 100, thus enabling a determination as to whether the user 100 is in a drowsing state or a wakeful state based on a first reference period Aα and a second reference period Bα that are suited to the individual user 100.

Moreover, in the present embodiment, as described above, the mobile terminal 1 is placed in a breast pocket 100a of the user 100, thus enabling the acceleration sensor 12 to detect reliably the shifting of the upper body, above the waist of a user 100 who is in a seated state, thus enabling the easy determination of whether the user 100 is in a drowsing state or a wakeful state.

Moreover, in the present embodiment, as described above, when there is a determination by the controlling portion 10 that the location information of the current location corresponds to the location information of the destination, the alarm portion 14 is activated to provide the user 100 with notification of arrival at the destination, and control is performed to terminate the notifying application. Concomitant with this, the control procedure in the drowsing detecting program is also terminated by the controlling portion 10, with the GPS receiving portion 13 in a stopped state, thus making it possible to reduce effectively the consumption of power in the GPS receiving portion 13 through stopping the GPS receiving portion 13, which had been driven until that point, because of not requiring location information for the current location after notifying the user 100 of arrival at the destination. Moreover, not only is the GPS receiving portion 13 stopped after the notification to the user 100 regarding the arrival at the destination, but the notifying application and the drowsing detecting program are also terminated, enabling a reduction in power consumption in the controlling portion 10.

Note that the embodiments disclosed herein are, in all points, illustrative, and must not be considered to be limiting.

For example, while in the embodiment set forth above an example wherein an acceleration sensor 12 was used was provided as one example of a "detecting portion" in the present disclosure, the present invention is not limited thereto. The detecting portion for detecting the state of the user is not limited in the present invention to an acceleration sensor. For example, instead a camera portion that is always able to image the face of the user may be provided in the mobile terminal, and the determination of the drowsing state versus the wakeful state of the user may be performed based on the degree of opening of the eyes of the user (the user state), imaged by the camera portion.

Moreover, in the present embodiment an example was presented wherein the controlling portion 10 determined the first shifting period A as matching the first reference period Aα if the first shifting period A was included in a range from approximately 90% to approximately 110% (a range of approximately + or -10%) of the first reference period Aα. Furthermore, in an example was presented wherein the controlling portion 10 determined a second shifting period Bn as matching the second reference period Bα if the second shifting period Bn was included in a range from approximately 90% to approximately 110% (a range of approximately + or -10%) of the second reference period Bα. However, the present invention is not limited thereto. In the present invention, the range wherein a first shifting period is determined as matching the first reference period, and the range wherein a second shifting period is determined as matching the second reference period is not limited to the range of approximately ± 10%. Note that in order to determine appropriately whether the user is in a drowsing state versus a wakeful state, the ranges determined as matching are ranges near to the first reference period and the second reference period. The ranges determined as matching are in ranges of no less than approximately ± 5% and no more than approximately ± 10%.

Furthermore, while in the embodiment set forth above an example was presented wherein the time interval between a maximum value in the positive direction for the acceleration in the series of shifts of the body and a maximum value for the acceleration in the positive direction in the next series of shifts of the body was defined as the second shifting period B, there is no limitation thereto in the present invention. For example, the time interval between the maximum value of the acceleration in the negative direction in a series of shifts of the body and the maximum value of the acceleration in the negative direction in the next series of shifts of the body may be defined as the second shifting period.

Moreover, while in the present embodiment an example was presented wherein the alarm portion 14 is activated to provide the user 100 with a notification of arrival at the destination when there is a determination by the controlling portion 10 that the location information for the current location corresponds to the location information for the destination, the present invention is not limited thereto. In the present invention, not just the GPS receiving portion, but the acceleration sensor may also be stopped when the user is notified of the arrival at the destination. Doing so makes it possible to reduce the power consumed in both the GPS receiving portion and in the acceleration sensor, which no longer need be driven, thus making it possible to reduce effectively the power consumed in the mobile terminal.

Moreover, while in the present embodiment an example was presented wherein the GPS receiving portion 13, which had been driven, is stopped when there is a determination by the controlling portion 10 that the user 100 is in a wakeful state after the user 100 was determined as being in a drowsing state, the present invention is not limited thereto. Instead, in the present invention, the GPS receiving portion that is driven need not necessarily be stopped once there has been a determination that the user is in a drowsing state. Doing so makes it possible to prevent effectively the user from riding past the destination, through the ability to notify the user of the arrival at the destination once the user has been determined to be in a drowsing state. Moreover, even in this case, it is still possible to decrease the power consumed in the GPS receiving portion because the GPS receiving portion is not activated until there is a determination that the user is in a drowsing state.

Moreover, while in the embodiment set forth above an example is presented wherein threshold values +Z and -Z, a first reference period Aα, and a second reference period Bα that are personal information that are unique to the user 100 are used, the present invention is not limited thereto. In the present invention threshold values, a first reference period, and a second reference period that are common to a plurality of users may be used instead. In such a case there is no need for the user to set the personal information.

Furthermore, while in the embodiment set forth above an example was presented wherein the determination of the drowsing state or the wakeful state of the user was performed based on the first reference period Aα and the second reference period Bα, the present invention is not limited thereto. For example, the determination of the drowsing state versus the wakeful state of the user may be performed based on the second reference period, without using the first reference period.

Furthermore, while in the embodiment set forth above an example was presented wherein the threshold value +Z and the threshold value -Z were calculated as values wherein the average of the positive maximum values and the average of the negative maximum values were reduced by a specific percentage, the present invention is not limited thereto. For example, the smallest maximum value from among a plurality of maximum values may be set as the threshold value.

Moreover, while in the embodiment set forth above an example was presented wherein the first reference period Aα and the second reference period Bα were respectively calculated as the average value of a plurality of first shifting periods A and the average value of a plurality of second shifting periods B. The present invention is not limited thereto. For example, instead the median value of a plurality of first shifting periods and the median value of a plurality of second shifting periods may, respectively, be defined as the first reference period and the second reference period.

Furthermore, while in the embodiment set forth above an example was presented wherein the determination was that the user 100 was in a drowsing state when, of the Nα second shifting periods B, the number of second shifting periods B matching the second reference period Bα was greater than or equal to 0.8 Nα (greater than or equal to 80%), the present invention is not limited thereto. For example, instead the determination that the user is in a drowsing state may be made only when all of a specific number of second shifting periods match the second reference period. Doing so makes it possible to further reduce the power consumed by the GPS receiving portion by making it less likely that the GPS receiving portion will be driven.

Furthermore, while in the embodiment set forth above an example was presented wherein the mobile terminal 1 was placed into the breast pocket 100a of the user 100, the present invention is not limited thereto. Instead, in the present invention, the mobile terminal may be placed into, for example, the seat pocket, or the like, of the user, rather than the breast pocket, insofar as the detecting portion is able to detect the state of the user. Note that the mobile terminal is placed on at least the upper body of the user when the shifting of the body of a user in a seated state is detected by the acceleration sensor. Doing so makes it possible for the acceleration sensor to detect easily the shifting of the body of the user in the seated state. Furthermore, the user instead may be in a standing state rather than a seated state.

Moreover, while in the embodiment set forth above the explanation used a flow-driven type of flow chart wherein the procedures of the controlling portion of the present invention are performed sequentially following the control procedure flow, the present invention is not limited thereto. Instead, the procedure operations of the controlling portion may be performed through procedures of an event-driven type, with the procedures performed by the event unit. In such a case, this may be performed in a completely event-driven form, or may be performed by combining event-driven and flow-driven procedures.

### [Explanation of Reference numerals]

1: Mobile Terminal
10: Controlling Portion
12: Acceleration Sensor (Detecting Portion)
13: GPS Receiving Portion (Location Information Acquiring Portion)
14: Alarm Portion (Notifying Portion)
100: User

## Claims

1. A mobile terminal (1) comprising:
a detecting portion (12) that detects a state of a user (100);
a location information acquiring portion (13) that acquires location information of a current location of the user (100); and
a controlling portion (10) configured to determine whether the user (100) is in a drowsing state or a wakeful state, based on the state of the user (100) detected by the detecting portion (12), wherein
if the controlling portion (10) determines that the user (100) is in a drowsing state, the controlling portion (10) drives the location information acquiring portion (13) so as to acquire the location information for the current location, and
if the controlling portion (10) determines that the user (100) is in a wakeful state, the controlling portion (10) stops the location information acquiring portion (13).

2. The mobile terminal (1) of claim 1, wherein:
the detecting portion (12) is configured to enable detection of shifting of the body of the user (100); and
the controlling portion (10) is configured to:
acquire a shifting period during which shifting of the body of the user (100) occurs at or above a threshold value, and
determine a drowsing state versus a wakeful state of the user (100) based on the acquired shifting period.

3. The mobile terminal (1) of claim 2, wherein:
the controlling portion (10) is configured to determine whether the acquired shifting period matches a reference period, and to determine that the user (100) is in a drowsing state if at least a specific percentage of a number of shifting periods matches the reference period.

4. The mobile terminal (1) of claim 3, wherein:
the controlling portion (10) is configured to determine an acquired shifting period as matching the reference period if the acquired shifting period is within a specific range of the reference period.

5. The mobile terminal (1) of claim 3 or claim 4, wherein:
the controlling portion (10) is configured to determine whether an acquired shifting period matches the reference period based on a reference period unique to the user (100), set in advance by the user (100).

6. The mobile terminal (1) of any of claims 2-5, wherein:
the mobile terminal (1) is intended to be placed near a chest portion of the user (100) who is in a seated position.

7. The mobile terminal (1) of any of claims 1-6, further comprising:
a notifying portion (14) that provides notification to the user (100) of an arrival at a destination based on the location information of the current location, obtained by the location information acquiring portion (13), wherein
the controlling portion (10) is configured to control the notifying portion (14) to provide notification of arrival at a destination to the user (100) determined as being in a drowsing state.

8. The mobile terminal (1) of claim 7, wherein
the controlling portion (10) is configured to:
control the notifying portion (14) to provide notification of arrival at the destination, and
stop the location information acquiring portion (13) and the detecting portion (12).

9. A non-transitory computer-readable medium storing a program for causing a controlling portion (10) of a mobile terminal (1) to execute instructions comprising:
causing a detecting portion (12) to detect a state of a user (100);
determining whether the user (100) is in a drowsing state or a wakeful state based on the state of the user (100) detected by the detecting portion (12);
driving a location information acquiring portion (13) to obtain location information for a current location of the user (100) when the user (100) has been determined as being in a drowsing state; and
stopping the location information acquiring portion (13) when the user (100) has been determined as being in a wakeful state.
